# EUROPEAN PATENT SPECIFICATION

(11) **EP 1 045 387 B1**
(45) Date of publication and mention of the grant of the patent: **17.01.2007**
(21) Application number: 00108184.3
(22) Date of filing: 13.04.2000
(51) Int. Cl.: G11B 20/00, G06F 1/00

(54) **Data management apparatus, data management method, and record medium recording data management program**
Datenverwaltungsgerät und -verfahren, und Speichermedium zum Speichern eines Datenverwaltungsprogramms
Appareil et méthode de gestion de données, et support d'enregistrement stockant un programme de gestion de données

(30) Priority: 14.04.1999 JP 10677299
(43) Date of publication of application: 18.10.2000
(73) Proprietor: MATSUSHITA ELECTRIC INDUSTRIAL CO., LTD., Kadoma-shi, Osaka-fu 571-8501 (JP)
(72) Inventor: Syoda, Yukie, Osaka-fu 570-0013 (JP); Kozuka, Masayuki, California 91008 (US); Hirata, Noboru,, Osaka-fu 576-0065 (JP); Ohtani, Yukako, Osaka-fu 570-0034 (JP)
(74) Representative: Grünecker, Kinkeldey, Stockmair & Schwanhäusser Anwaltssozietät

(56) References cited:
- EP-A- 0 773 490
- EP-A- 0 807 931
- WO-A-00/28539
- US-A- 5 765 152
- MARC A KAPLAN: "IBM Cryptolopes, SuperDistribution and Digital Rights Management" IBM RESEARCH, [Online] 30 December 1996 (1996-12-30), XP002132994 Retrieved from the Internet: <URL:http://www.research.ibm.com/people/k/ kaplan/cryptolope-docs/crypap.html> [retrieved on 2000-03-14]

## Description

### BACKGROUND OF THE INVENTION

### (1) Field of the Invention

The present invention relates to a system which deals with digital contents distributed in a market. More particularly, the present invention relates to a technique for protecting digital contents.

### (2) Description of the Prior Art

Recently, various, a vast amount of information has been digitized, including art such as literature, music, and still or moving images. Typically, digital contents are distributed among users via record mediums such as CDs or CD-ROMs or via a network (hereinafter, digital contents distributed via a network are called circulation contents).

In the former case, users load distributed CDs into their personal computers and enjoy the digital contents of, for example, music recorded in the CDs.

In the latter case, circulation contents are downloaded into personal computers via a network, where communications capabilities of the computers are used. "Music Distribution Ready to Start" (Nikkei Electronics, No.738, pp87 to 111, Nikkei Business publications, Inc., issued on March 8 1999) introduces an music distribution system. The music distribution system features a content control method. According to this method, each circulation content includes a pair of files A and B. The file A is composed of an encrypted music content, and the file B is composed of a decryption key and control information, the decryption key being used for decrypting the file A, and the control information indicating whether playing or copying of the file A is permitted or not. When the playing of the music content included in the file A is attempted, the control information included in the file B is used to judge whether the file A can be played or copied.

The above-described music distribution system protects the contents from unauthorized operations of play, copy or the like by imposing a certain limit to such operations using the control information which indicates whether the operations on the contents corresponding to the control information are permitted or not.

A managing system for the distribution and protection of copyrighted electronic media is described by US-A-5,765,152. Subsequent to the production of content elements forming the electronic media, the electronic media is packaged into a secure electronic format. The packaged data includes content element specific usage permissions for each content element of the electronic media.

However, in reality, some circulation contents do not include the control information. It is also typical that CDs include unencrypted music digital contents and do not include such control information. This brings a problem that digital contents are not sufficiently protected from unauthorized play or copy operations in personal computers.

It is therefore an object of the present invention to provide a data management apparatus, a data management method, and a record medium recording a data management program which protect circulation contents not including the control information and digital contents recorded in record mediums such as CDs or CD-ROMs, as well as circulation contents including the control information.

This is achieved by the features of the independent claims.

Further embodiments are subject-matter of the dependent claims.

According to the present invention, when having obtained a content to which rights information has not been added, the data management apparatus stores the obtained content with corresponding rights information, it is possible to impose a limit to playing of the content in a similar way as "circulation contents" to which the rights information has been added. This enables the obtained content to be protected from unauthorized operations.

In the above data management apparatus, the content writing means may further add the read rights information to the digital content written to the content storage means.

With the above construction in which the data management apparatus adds the obtained rights information to the digital content written to the content storage means so that the content is stored with the same file type as "circulation contents", it is possible for apparatuses capable of managing circulation contents to which the rights information has been added beforehand to manage the content in the same way as the circulation contents.

In the above data management apparatus, each piece of rights information may further include copy rights information indicating whether a check out is permitted or not, wherein in each check out, a digital content and a piece of copy rights information corresponding to the digital content are copied to an external device.

With the above construction in which the rights information includes the copy rights information as well as the play rights information, it is possible to impose a limit to check outs of the content as well as to playing of the content. This enables the obtained content to be protected from unauthorized operations.

In the above data management apparatus, each piece of copy rights information may include the number of permitted check outs.

With the above construction, the number of check outs performed on the content is limited to the number of permitted check outs.

In the above data management apparatus, each piece of rights information may further include move rights information indicating whether a digital content and a piece of rights information corresponding to the digital content are permitted to be moved to an external device.

With the above construction in which the rights information includes the move rights information as well as the play rights information, it is possible to impose a limit to moving of the content as well as to playing of the content. This enables the obtained content to be protected from unauthorized operations.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:
FIG. 1 shows a usage pattern of the data management apparatus 100 as an embodiment of the present invention;
FIG. 2 is a block diagram showing the construction of the data management apparatus 100;
FIG. 3 is a block diagram showing a detailed construction of the data management apparatus 100;
FIG. 4 shows an example of the control method table 101 in the data management apparatus 100;
FIG. 5 shows an example of the rights management table 102 in the data management apparatus 100;
FIG. 6 shows an example of the data management table 105 in the data management apparatus 100;
FIG. 7 is a flowchart showing the operation of the data management apparatus 100;
FIG. 8 shows a usage pattern of the data management apparatus 800 as another embodiment of the present invention;
FIG. 9 is a block diagram showing the construction of the data management apparatus 800;
FIG. 10 shows an example of the control method table 813 in the data management apparatus 800;
FIG. 11 shows an example of the multi data management table 807 in the data management apparatus 800;
FIG. 12 is a flowchart showing the operation of the data management apparatus 800 in obtaining a content from an external source or a record medium such as CD or DVD; and
FIG. 13 is a flowchart showing the operation of the data management apparatus 800 in writing a content to the record medium 811.

### DESCRIPTION OF THE PREFERRED EMBODIMENTS

### 1 Embodiment 1

A data management apparatus 100, an embodiment of the present invention, will be described.

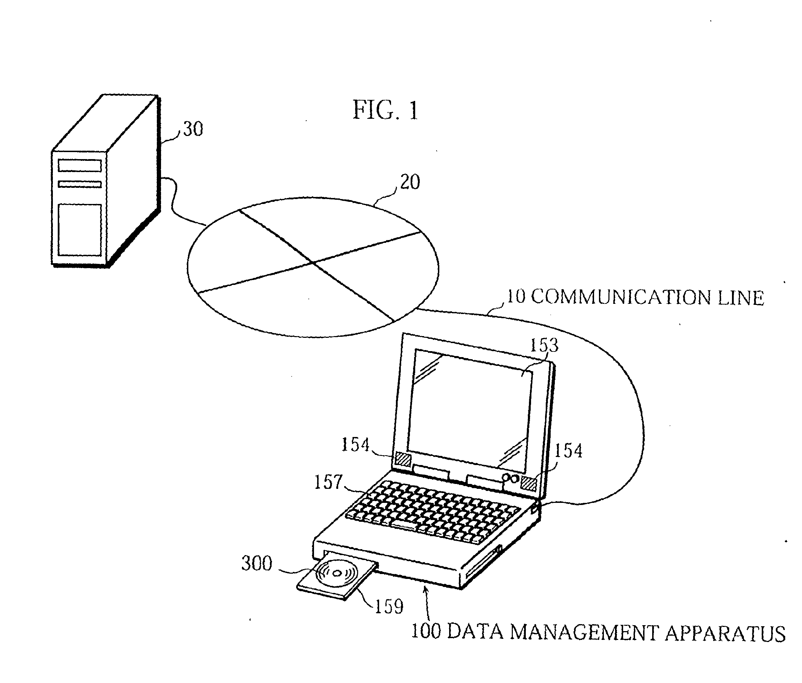

As shown in FIG. 1, the data management apparatus 100 is connected to a network 20 via a communication line 10, where the network 20 is, for example, the Internet or a cable TV. A Web server 30 which supplies music information including music contents is also connected to the network 20. The data management apparatus 100 obtains music information from the Web server 30 and stores the obtained information. The data management apparatus 100 also reads out music information including music contents from a CD 300 and stores the obtained information. The data management apparatus 100 plays and outputs the stored music information from speakers 154.

In this way, users of the data management apparatus 100 can enjoy music.

### 1.1 Construction of Data Management Apparatus 100

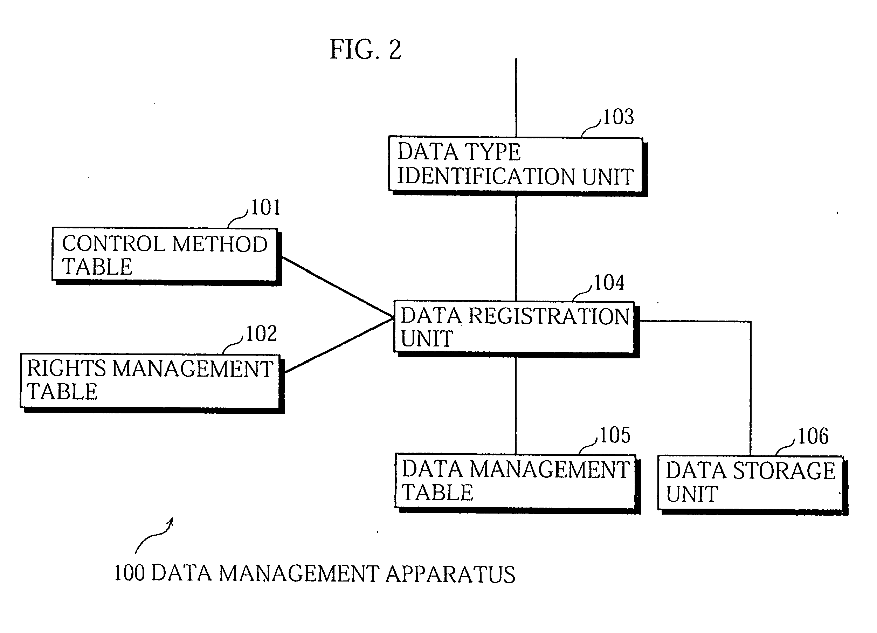

The data management apparatus 100, as shown in FIG. 2, includes a control method table 101, a rights management table 102, a data type identification unit 103, a data registration unit 104, a data management table 105, and a data storage unit 106.

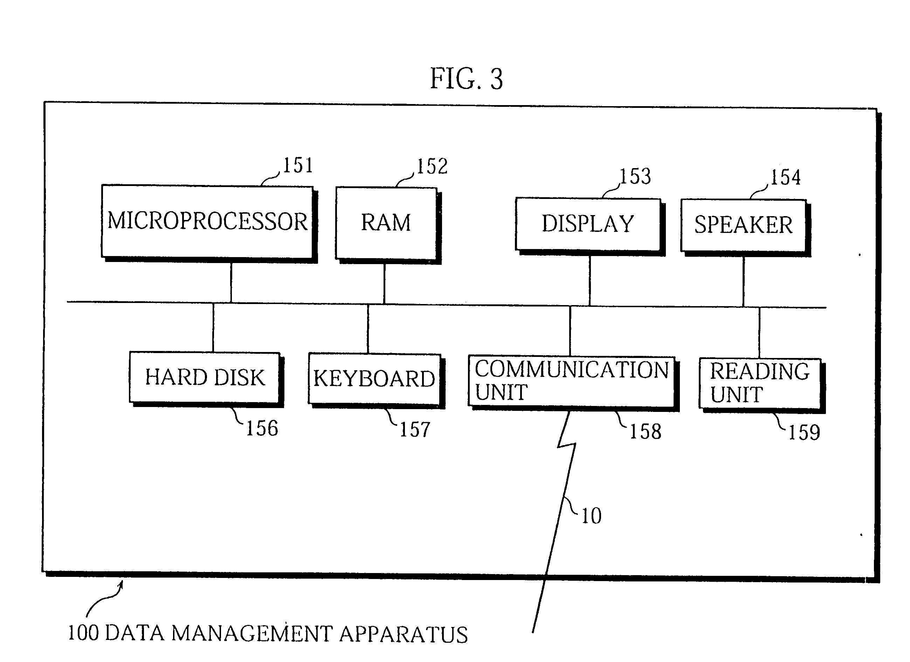

More specifically, as shown in FIG. 3, the data management apparatus 100 includes a microprocessor 151, a RAM (Random Access Memory) 152, a display 153, speakers 154, a hard disk 156, a keyboard 157, a communication unit 158, and a reading unit 159. The communication unit 158 is connected to the communication line 10. A computer program has been stored in the hard disk 156. The data type identification unit 103 and the data registration unit 104 operate as the computer program runs in the data management apparatus 100 using the microprocessor 151. The control method table 101, the rights management table 102, the data management table 105, and the data storage unit 106 are achieved in the hard disk 156.

### Data Type Identification Unit 103

The data type identification unit 103 includes the communication unit 158 which is connected to the Web server 30 via the network 20 being, for example, the Internet or a cable TV. The data type identification unit 103 also includes the reading unit 159 which reads out data from record mediums such as CDs and DVDs.

The data type identification unit 103 obtains a circulation content from the Web server 30 based on an instruction from the user. Each circulation content includes a file A and a file B. The file A includes an encrypted content such as an encrypted music content. The file B includes rights information which indicates whether play, copy, or move of the file A is permitted or not. The file B also includes encryption method information indicating an encryption method used for encrypting the encrypted content, and includes a decryption key used for decrypting the encrypted content. The data type identification unit 103 outputs the obtained circulation content, the file name of the file A, and information indicating that the content to be sent is a circulation content to the data registration unit 104.

The data type identification unit 103, also based on an instruction from the user, reads out a not-encrypted content from a CD or DVD loaded into the data management apparatus 100 and outputs the read-out not-encrypted content and information indicating either CD or DVD to the data registration unit 104.

A type of the rights information which indicates whether play of the file A is permitted or not is referred to as play rights information.

Another type of the rights information which indicates whether copy of the file A is permitted or not is referred to as copy rights information. The copy rights information also indicates whether a check out is permitted or not and includes the number of permitted check outs. It should be noted here that in each "check out", a content and play rights information corresponding to the content are copied from the current apparatus to another apparatus and the number of permitted check outs for the content is reduced by one in the current apparatus. Also, in each "check in", the play rights information corresponding to the content is returned from the other apparatus to the current apparatus and the number of permitted check outs for the content is increased by one in the current apparatus. In this case, the content having been copied to the other apparatus becomes unusable.

A type of the rights information which indicates whether move of the file A is permitted or not is referred to as move rights information. Here, in each "move", a content and all types of rights information are copied from the current apparatus to another apparatus and the content is rendered unusable in the current apparatus for eternity.

### Control Method Table 101

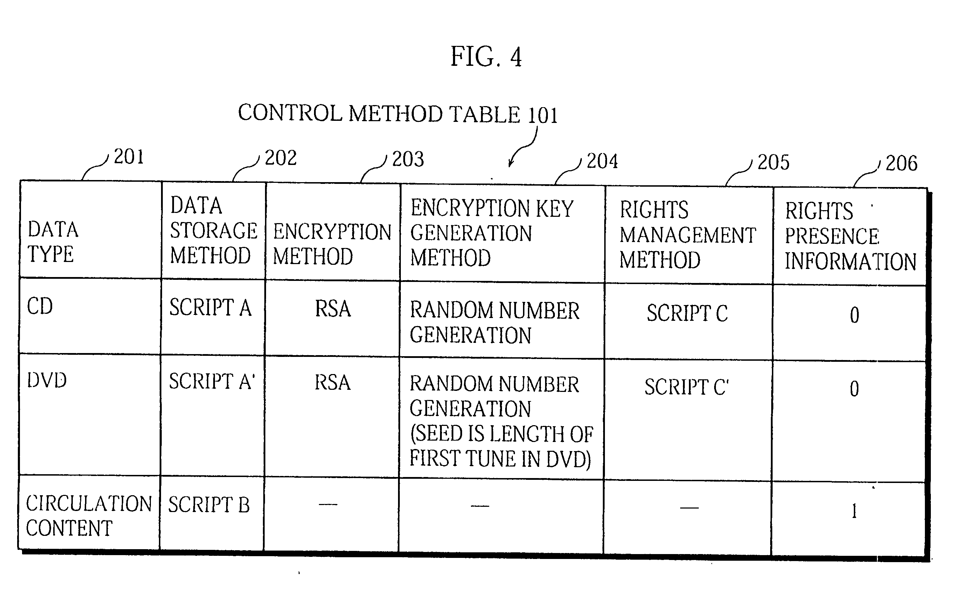

The control method table 101, as shown in FIG. 4, includes a plurality of sets of a data type, a data storage method, an encryption method, an encryption key generation method, a rights management method, and a rights presence information.

The "data type" shows a data type of a content. In FIG. 4, "circulation content" indicates that the content has been obtained via the network, and "CD" and "DVD" indicate that the contents have been obtained from mediums CD and DVD, respectively.

The "data storage method" includes a script which shows a procedure for processing the content.

In correspondence to "CD" shown in the "data type", the "data storage method" includes Script A which describes the data storage method as shown below. In correspondence to "DVD" shown in the "data type", the "data storage method" includes Script A' which is similar to Script A.

### Script A

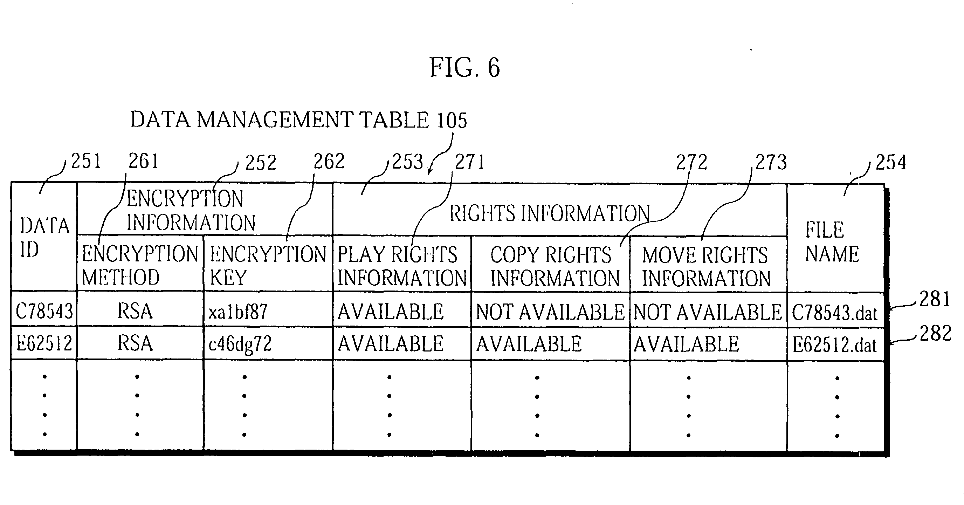

(Step 1) Generate an encryption key using an encryption key generation method corresponding to the data type "CD" included in the same set.
(Step 2) Encrypt the content read out from a CD to generate an encrypted content using the generated encryption key and based on an encryption method corresponding to the data type "CD" included in the same set.
(Step 3) Write the generated encrypted content to the data storage unit 106 as a file A.
(Step 4) Refer to Script C included in the same set as the "rights management method", then in accordance with Script C, refer to the rights management table 102 and read out rights information corresponding to the data type "CD" in the same set.
(Step 5) Refer to Script C included in the same set as the "rights management method", then in accordance with Script C, write a data ID, encryption information, rights information, and a file name in the data management table 105. Furthermore, write the encryption information and the rights information to the data storage unit 106 as a file B. Here, the data ID includes an identifier which uniquely corresponds to a content included in the CD. The encryption information is composed of an encryption method and an encryption key. The encryption method is used in Step 2 of Script A. The encryption key is generated in Step 1 of Script A. Each file name is composed of a file identifier, a separator ".", and a file type ("dat" in the example shown in FIG. 6). The file identifier uniquely corresponds to a content stored in the CD. The rights information is read out from the rights management table 102.

In correspondence to data type "circulation content", the "data storage method" includes Script B described as follows.

### Script B

(Step 1) Write the circulation contents obtained via the network to the data storage unit 106.
(Step 2) Write the data ID, encryption information, rights information, and file name to the data management table 105. Here, the data ID is the file identifier constituting the file name of the file A obtained via the network. The encryption information is composed of an encryption method and an encryption key. The encryption method is included in the file B obtained via the network. The encryption key is equal to the decryption key included in the file B obtained via the network. The rights information is obtained via the network. The "file name" is the file name of the file A obtained via the network.

The encryption method is a method for encrypting the content. In the present example, as shown in FIGs. 4 and 6, the encryption method in correspondence to the data types "CD" and "DVD" is "RSA". No encryption method is shown in correspondence to the data type "circulation content" in the same set.

The encryption key generation method is used in the encryption method shown in the same set. In the present example, as shown in FIG. 4, the encryption key generation method corresponding to the data types "CD" and "DVD" is "random number generation". Here, when the data type is "DVD", the length of the first tune recorded in the DVD disc is used as the seed in generating random numbers. No encryption key generation method is shown in correspondence to the data type "circulation content" in the same set.

In correspondence to "CD" shown in the "data type", the "rights management method" includes Script C which describes the rights management method as shown below. In correspondence to "DVD" shown in the "data type", the "rights management method" includes Script C' which is similar to Script C.

### Script C

(Step 1) Read out the rights information from the rights management table 102 and write the read rights information to the data management table 105.

It should be noted here that no rights management method is included in correspondence to the data type "circulation content" in the same set.

The rights presence information indicates whether rights information has been added to content. In the present example shown in FIG. 4, "0" indicates that the rights information has not been added to the content and "1" indicates that the rights information has been added to the content. As shown in FIG. 4, in the present embodiment, the rights information has not been added to the content read out from a CD or DVD, and the rights information has been added to the circulation content.

### Rights Management Table 102

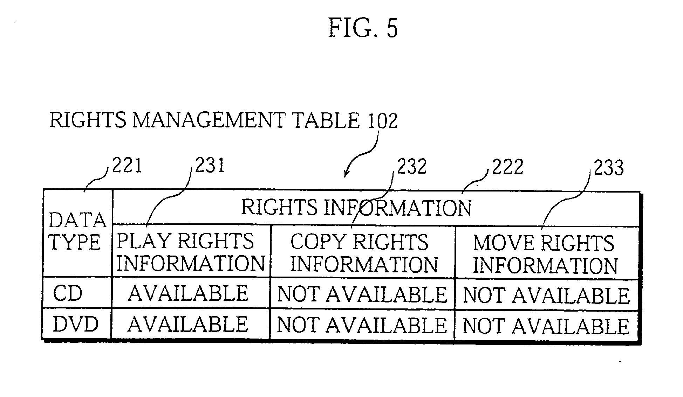

The rights management table 102, as shown in FIG. 5, includes a plurality of sets of a data type and rights information.

The "data type" shows a data type of a content and includes either "CD" or "DVD" indicating that the content has been read out from a CD or a DVD, but does not include "circulation content".

The rights information is composed of play rights information, copy rights information, and move rights information. The play rights information, copy rights information, and move rights information respectively show whether the user is permitted to play, copy, or move the content. "Available" indicates that the user is permitted to perform the operation. "Not available" indicates that the user is not permitted to perform the operation.

### Data Management Table 105

The data management table 105, as shown in FIG. 6, includes a plurality of sets of a data ID, encryption information, rights information, and a file name.

Each set of the data corresponds to a content stored in the data storage unit 106 in a one-to-one relationship.

The data ID includes an identifier of the content.

The encryption information is composed of an encryption method and an encryption key. The encryption method is used for encrypting the content identified by the data ID of the same set. The encryption key is used for encrypting the content identified by the data ID of the same set.

The rights information is composed of play rights information, copy rights information, and move rights information. The play rights information, copy rights information, and move rights information respectively show whether the user is permitted to play, copy, or move the content. "Available" indicates that the user is permitted to perform the operation. "Not available" indicates that the user is not permitted to perform the operation.

The "file name" is a file name of a file stored in the data storage unit 106 and including a content identified by the data ID of the same set. Each file name is composed of a file identifier, a separator ".", and a file type ("dat" in the example shown in FIG. 6). The file identifier of the file name is equal to the identifier included in the data ID of the same set.

In an example shown in FIG. 6, the content corresponding to a set 281 has the CD data type; and the content corresponding to a set 282 has the circulation content data type.

### Data Registration Unit 104

The data registration unit 104 receives from the data type identification unit 103 the circulation content, the file name of the file A, and information indicating that the sent content is a circulation content. The data registration unit 104 also receives not-encrypted contents and information indicating either CD or DVD for each of the not-encrypted contents.

When having received the information indicating that the sent content is a circulation content from the data type identification unit 103, the data registration unit 104 obtains a script describing a data storage method corresponding to data type "circulation content" from the control method table 101, and executes the obtained script.

When having received the information indicating that the sent content has been read from CD from the data type identification unit 103, the data registration unit 104 obtains a script describing a data storage method corresponding to data type "CD" from the control method table 101, and executes the obtained script. When having received the information indicating that the sent content has been read from DVD, the data registration unit 104 performs similarly.

### Data Storage Unit 106

The data storage unit 106 stores contents in the same file type as the circulation contents which each include a file A and a file B.

### 1.2 Operation of Data Management Apparatus 100

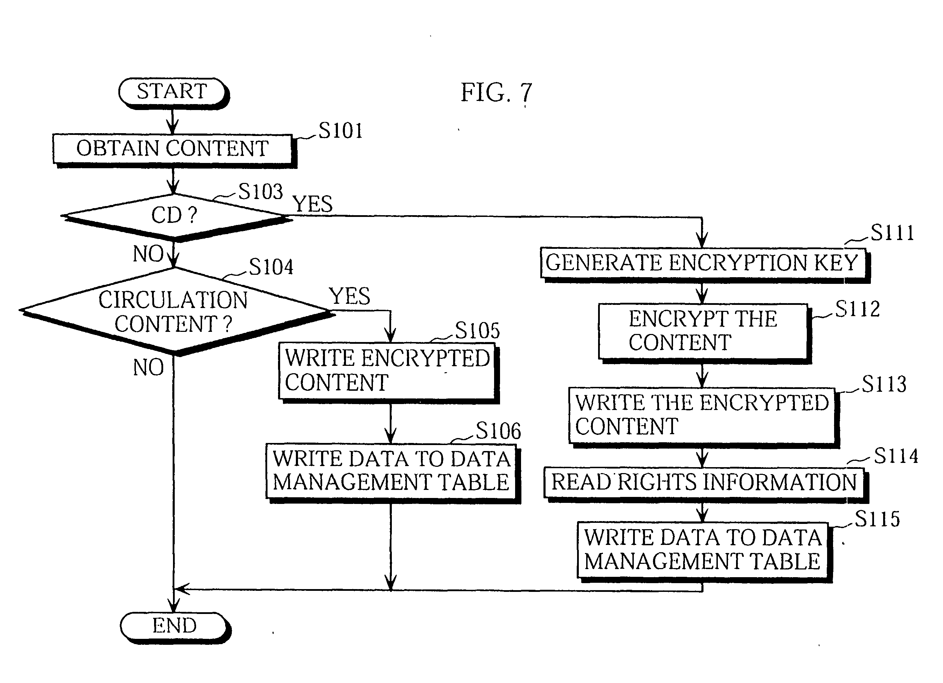

The operation of the data management apparatus 100 will be explained with reference to the flowchart shown in FIG. 7.

When having obtained a circulation content from an external source, the data type identification unit 103 outputs the obtained circulation content, the file name of the file A, and information indicating that the content to be sent is a circulation content to the data registration unit 104. Alternatively, when having read out a not-encrypted content from a CD or DVD loaded into the data management apparatus 100, the data type identification unit 103 outputs the read-out not-encrypted content and information indicating either CD or DVD to the data registration unit 104 (step S101)

When having received the information indicating that the sent content is a circulation content from the data type identification unit 103 (steps S103 and S104), the data registration unit 104 obtains a script describing a data storage method corresponding to "circulation content" included in the same set from the control method table 101, and executes the obtained script to write the file A of the circulation content including an encrypted content to the data storage unit 106 (step S105), then writes the data ID, encryption information, rights information, and file name to the data management table 105 (step S106).

When having received the information indicating that the sent content has been read from CD from the data type identification unit 103 (step S103), the data registration unit 104 obtains a script describing a data storage method corresponding to "CD" in the same set from the control method table 101, and executes the obtained script to generate an encryption key using an encryption key generation method corresponding to "CD" (step S111), encrypts the content and generates an encrypted content using the generated encryption key and based on an encryption method corresponding to "CD" in the same set (step S112), writes the generated encrypted content to the data storage unit 106 (step S113), refers to Script C describing the rights management method, then in accordance with Script C, refers to the rights management table 102 and read out rights information corresponding to "CD" in the same set (step S114), refers to Script C describing the rights management method, then in accordance with Script C, writes the data ID, encryption information, rights information, and file name in the data management table 105, and writes the encryption information and the rights information to the data storage unit 106 (step S115).

### 1.3 Brief Account

As described above, in Embodiment 1, it is possible to protect not-encrypted contents of CDs or DVDs, as in circulation contents, by encrypting the contents with a certain encryption method and adding rights information to impose a certain limit to operations like play, copy, and move.

Also, even if a new data type is developed, it is possible to deal with the new data type without difficulty by adding the new data type, encryption method, encryption key generation method, rights management method, and rights information to the control method table 101 and the rights management table 102.

### 2 Embodiment 2

A data management apparatus 800, another embodiment of the present invention, will be described.

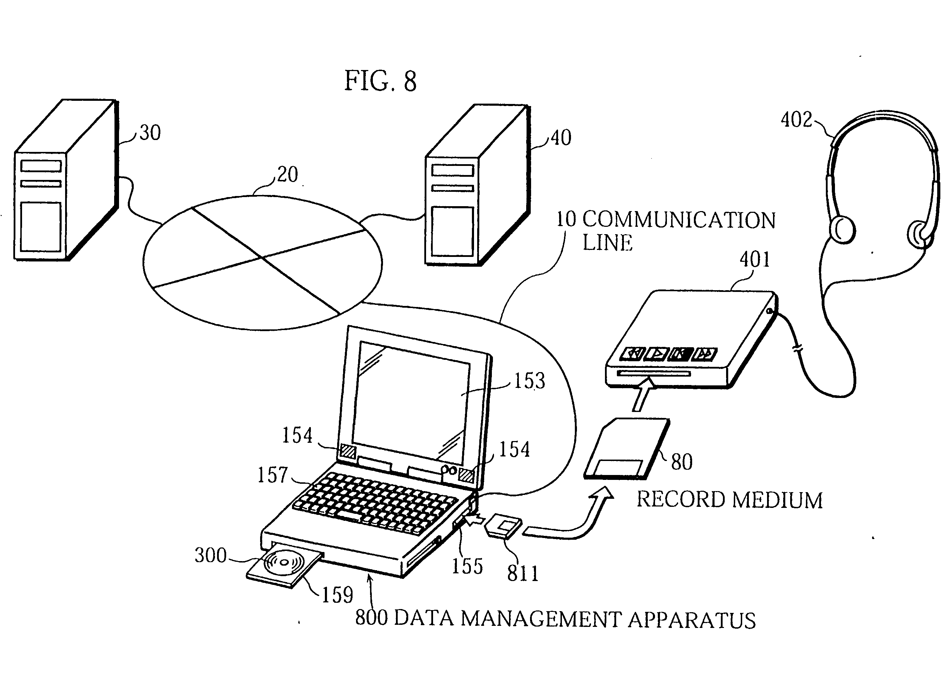

As shown in FIG. 8, the data management apparatus 800 is connected to a network 20, such as the Internet or a cable TV, via a communication line 10. A Web server 30 which supplies music information including music contents is also connected to the network 20. Furthermore, an accounting server 40 for distributing the rights information to users in accordance with usage charges confirmed to be payed by the users is connected to the network 20. The data management apparatus 800 obtains music information from the Web server 30 and stores the obtained information in itself. The data management apparatus 800, based on an instruction from the user, confirms that the user pays a usage charge for a desired content to the accounting server 40, and receives the rights information in accordance with the payed usage charge from the accounting server 40. The data management apparatus 800 also reads out music information including music contents from a CD 300 and stores the obtained information in itself. The data management apparatus 800, based on the received rights information, plays and outputs the stored music information from speakers 154.

The data management apparatus 800, based on the received rights information, also writes the stored music information to a record medium 811. The user can load the record medium 811 with the music information written on it into a portable player 401, which plays and outputs the music information from headphones 402. The record medium 811 is achieved by a semiconductor memory card, for example.

In this way, users of the data management apparatus 800 can enjoy music.

### 2.1 Construction of Data Management Apparatus 800

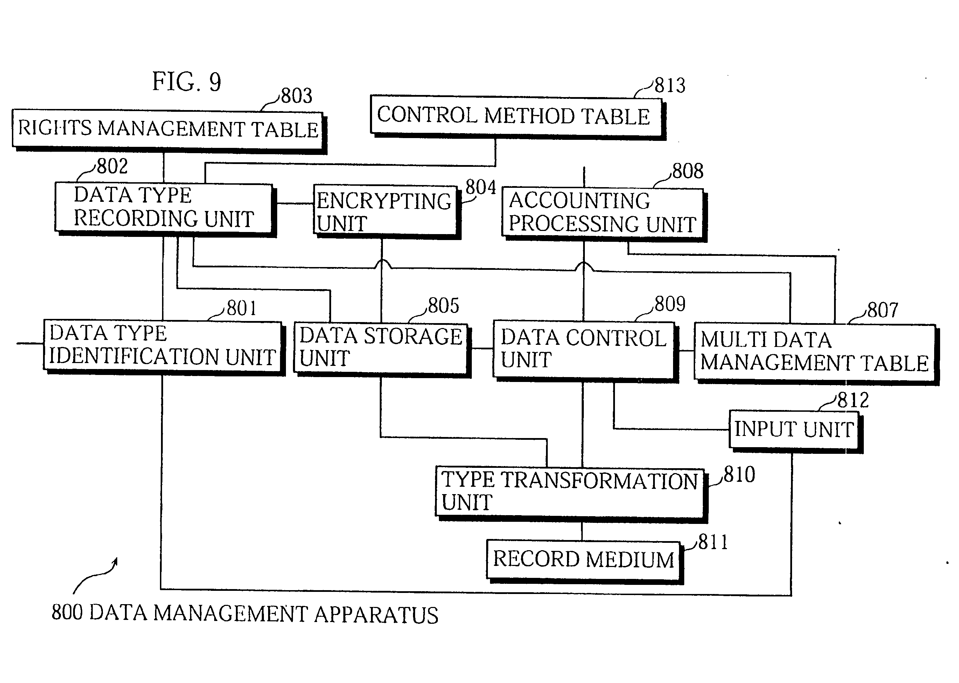

The data management apparatus 800, as shown in FIG. 9, includes a data type identification unit 801, a data type recording unit 802, a rights management table 803, an encrypting unit 804, a data storage unit 805, a multi data management table 807, an accounting processing unit 808, a data control unit 809, a type transformation unit 810, an input unit 812, and a control method table 813.

More specifically, as the data management apparatus 100, the data management apparatus 800 includes a microprocessor, a RAM, a display, speakers, a record medium drive, a hard disk, a keyboard, a communication unit, and a reading unit. The communication unit is connected to the communication line. A computer program has been stored in the hard disk. The data type identification unit 801, encrypting unit 804, accounting processing unit 808, data control unit 809, and type transformation unit 810 operate as the computer program runs in the apparatus using the microprocessor. The data type identification unit 801 and the accounting processing unit 808 includes the communication unit. The rights management table 803, data storage unit 805, multi data management table 807, and control method table 813 are achieved in the hard disk.

### Input Unit 812

The input unit 812, which is achieved by the keyboard and the like, receives source information, content identifiers, and content operation information from the user, where the source information indicates sources of contents, the content identifiers are identifiers of contents, and the content operation information indicates contents operations which are classified into play, copy, and move.

Note that a source indicated by a piece of source information is one of an external source connected via the network and a record medium such as CD or DVD.

The input unit 812 outputs the received source information and the content identifiers to the data type identification unit 801. The input unit 812 also outputs the received source information, content identifiers, and content operation information to the data control unit 809.

### Data type Identification Unit 801

The data type identification unit 801 receives the source information and the content identifiers from the input unit 812.

The data type identification unit 801 is, like the data type identification unit 103 of the data management apparatus 100, connected to external sources via the network such as the Internet or a cable TV.

The data type identification unit 801, when having received from the input unit 812 a content identifier and a piece of source information which indicates an external source connected via the network, obtains a circulation content identified by the received content identifier. Each circulation content includes a file A and a file B. The file A includes an encrypted content such as an encrypted music content. The file B includes rights information which indicates whether play, copy, or move of the file A is permitted or not. The file B also includes encryption method information indicating an encryption method used for encrypting the encrypted content, and includes a decryption key used for decrypting the encrypted content. The data type identification unit 801 outputs the obtained circulation content, the file name of the file A, and information indicating that the content to be sent is a circulation content to the data type recording unit 802.

The data type identification unit 801 includes a reading unit for reading data from record mediums such as CDs and DVDs.

The data type identification unit 801, when having received from the input unit 812 a content identifier and a piece of source information which indicates a record medium such as CD or DVD, reads out a not-encrypted content identified by the received content identifier from a CD or DVD loaded into the reading unit and outputs the read-out not-encrypted content and information indicating either CD or DVD to the data type recording unit 802.

### Rights Management Table 803

Description of the rights management table 803 is omitted here since it is the same as the rights management table 102 of the data management apparatus 100.

### Control Method Table 813

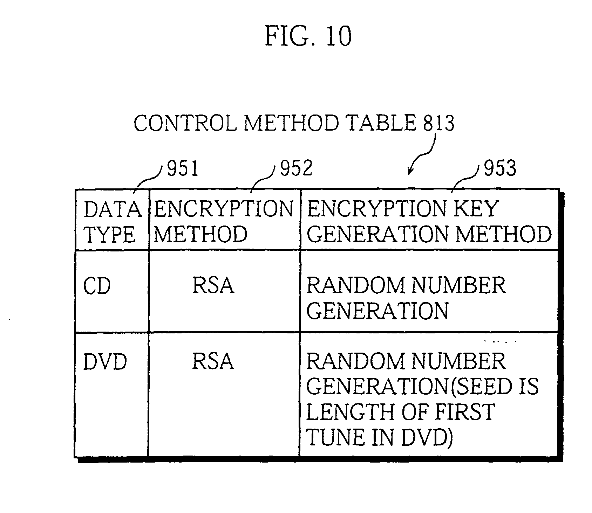

The control method table 813, as shown in FIG. 10, includes a plurality of sets of a data type, an encryption method, and an encryption key generation method.

The data type corresponds to the source of the content. In FIG. 10, "CD" and "DVD" indicate that the contents have been read out from mediums CD and DVD, respectively.

The encryption method is a method for encrypting the content. In the present example, as shown in FIG. 10, the encryption method for "CD" and "DVD" is "RSA".

The encryption key generation method is used in the encryption method included in the same set. In the present example, as shown in FIG. 10, the encryption key generation method corresponding to "CD" and "DVD" is "random number generation". Here, when the data type is "DVD", the length of the first tune recorded in the DVD disc is used as the seed in generating random numbers.

### Data type Recording Unit 802

The data type recording unit 802 receives from the data type identification unit 801 a circulation content, a file name of the file A, and information indicating that the sent content is a circulation content. The data type recording unit 802 also receives a not-encrypted content and information indicating either CD or DVD from the data type identification unit 801.

The data type recording unit 802, when having received a not-encrypted content and information indicating either CD or DVD from the data type identification unit 801, generates a random number, then use the generated random number to generate a sequence of six characters which are to be used as a content identifier.

The data type recording unit 802 then reads out, from the rights management table 803, rights information corresponding to the data type indicated by the received information.

The data type recording unit 802 also reads out, from the control method table 813, an encryption method and an encryption key generation method corresponding to the data type indicated by the received information, then generates an encryption key based on the read-out encryption key generation method.

The data type recording unit 802 writes the generated six-character sequence as a data ID to the multi data management table 807. The data type recording unit 802 also writes the read-out encryption method, encryption key, and rights information to the multi data management table 807. The data type recording unit 802 generates a file name by combining the generated six-character sequence, ".", and "dat" respectively as a file identifier, a separator, and a file type, then writes the generated file name to the multi data management table 807. The data type recording unit 802 also writes data type "CD" to the multi data management table 807. Note that the encryption information is composed of the encryption method and encryption key.

The data type recording unit 802 outputs the received not-encrypted content, the read-out encryption method, the generated encryption key, and the file name to the encrypting unit 804.

On receiving the circulation content, the file name of the file A, and information indicating that the sent content is a circulation content from the data type identification unit 801, the data type recording unit 802 writes the following to the data storage unit 805: the file identifier constituting the file name of the received file A, as a data ID; the encryption method included in the received circulation content; the decryption key included in the received circulation content; the rights information included in the received circulation content; the file name of the received file A; and data type "circulation content".

The data type recording unit 802 then writes the received circulation content to the data storage unit 805. In doing so, the file name of the file A of the circulation content is also written as the file name of the circulation content to the data storage unit 805.

### Encrypting Unit 804

On receiving a not-encrypted content, an encryption method, an encryption key, and a file name from the data type recording unit 802, the encrypting unit 804 encrypts the received not-encrypted content using the received encryption key and based on the received encryption method to generate an encrypted content, then writes the generated encrypted content to the data storage unit 805. In doing so, the received file name is also written as the file name of the encrypted content to the data storage unit 805.

### Data Storage Unit 805

The data storage unit 805 stores the encrypted contents generated by the encryption unit 804 and the circulation contents received by the data type recording unit 802.

### Multi Data Management Table 807

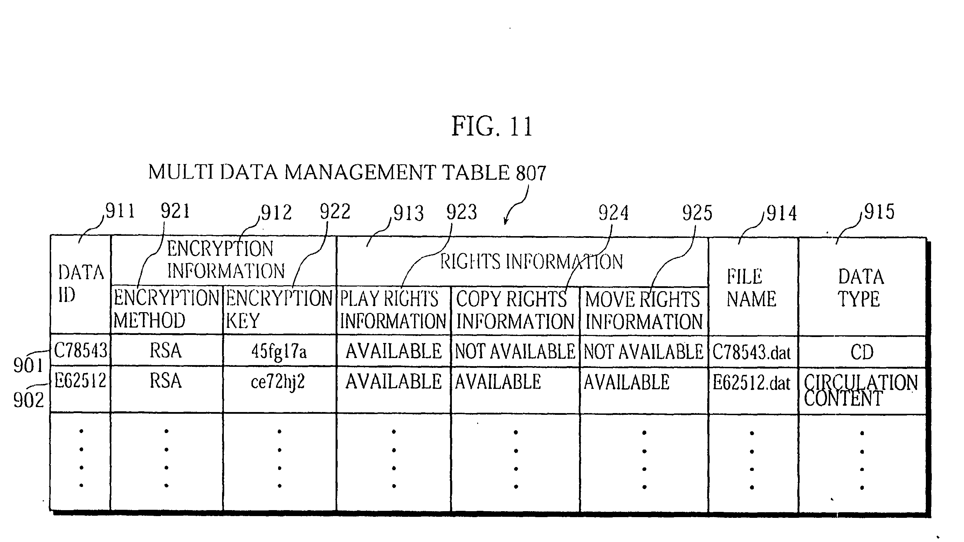

The multi data management table 807, as shown in FIG. 11, includes a plurality of sets of a data ID, encryption information, rights information, a file name, and a data type.

Each set of data corresponds to a content stored in the data storage unit 805 in a one-to-one relationship.

The encryption information is composed of the encryption method and encryption key. The rights information is composed of play rights information, copy rights information, and move rights information.

The data ID, encryption method, encryption key, play rights information, copy rights information, move rights information, and file name will not be detailed here since these elements are the same as those included in the data management table of the data management apparatus 100.

The data type includes data types of the contents in correspondence to the sources of the contents. In the table, "circulation content" indicates that the content has been obtained via the network, and "CD" and DVD" indicate that the contents have been read out from mediums CD and DVD, respectively.

In an example shown in FIG. 11, the content corresponding to a set 901 has the CD data type; and the content corresponding to a set 902 has the circulation content data type.

### Accounting Processing Unit 808

The accounting processing unit 808 is connected to external sources via a network such as the Internet or a cable TV.

The accounting processing unit 808 receives a content identifier and usage information indicating how the content is used from the data control unit 809.

The accounting processing unit 808, based on the received usage information, performs an accounting process in which the charge for the use of a content identified by the content identifier is payed to an external source, and receives the rights information in accordance with the payed usage charge from the external source. The rights information indicates whether play, copy, or move of the content is permitted or not.

The accounting processing unit 808 replaces the rights information written in the multi data management table 807 in a set including the received content identifier, with the rights information received from the external source.

### Data Control Unit 809

The data control unit 809 receives the source information, content identifier, and usage information from the input unit 812.

The data control unit 809 compares the usage indicated by the received usage information with the rights information written in the same set as the received content identifier in the multi data management table 807 so as to judge whether the usage is available.

More specifically, the data control unit 809 judges that the usage is available when the corresponding rights information written in the play rights information, copy rights information, or move rights information is "available"; and judges that the usage is not available when it is "not available".

Having judged that the usage is available and a copy is available based on the copy rights information, the data control unit 809 instructs the type transformation unit 810 to transform the type of the content identified by the received content identifier to the type of the record medium loaded into the type transformation unit 810 and to write the content with the transformed type to the record medium. The data control unit 809 outputs the received content identifier to the type transformation unit 810.

Having judged that the usage is not available and when the received source information indicates "CD" or "DVD", the data control unit 809 ends the process.

Having judged that the usage is not available and when the received source information indicates an external source connected via the network, the data control unit 809 outputs the received content identification and the usage information of the content to the accounting processing unit 808. The data control unit 809 performs the judgement on whether the usage is available after the accounting process by the accounting processing unit 808 is complete. Then, when having judged that the usage is available based on the rights information, the data control unit 809 instructs the type transformation unit 810 to transform the type of the content identified by the received content identifier to the type of the record medium loaded into the type transformation unit 810 and to write the content with the transformed type to the record medium, and outputs the received content identifier to the type transformation unit 810.

### Format Transformation Unit 810

The type transformation unit 810 includes a writing unit for writing data to the record medium 811.

Having received a content identifier and an instruction to transform the type from the data control unit 809, the type transformation unit 810 reads out a content identified by the received content identifier from the data storage unit 805, transforms the type of the read-out content to the type of the record medium 811 loaded into the type transformation unit 810, and writes the content with the transformed type to the record medium 811.

### Record Medium 811

The record medium 811, which is achieved by a semiconductor memory, DVD-RAM or the like, is loaded into the type transformation unit 810. The record medium 811 records contents whose type has been transformed by the type transformation unit 810.

### 2.2 Operation of Data Management Apparatus 800

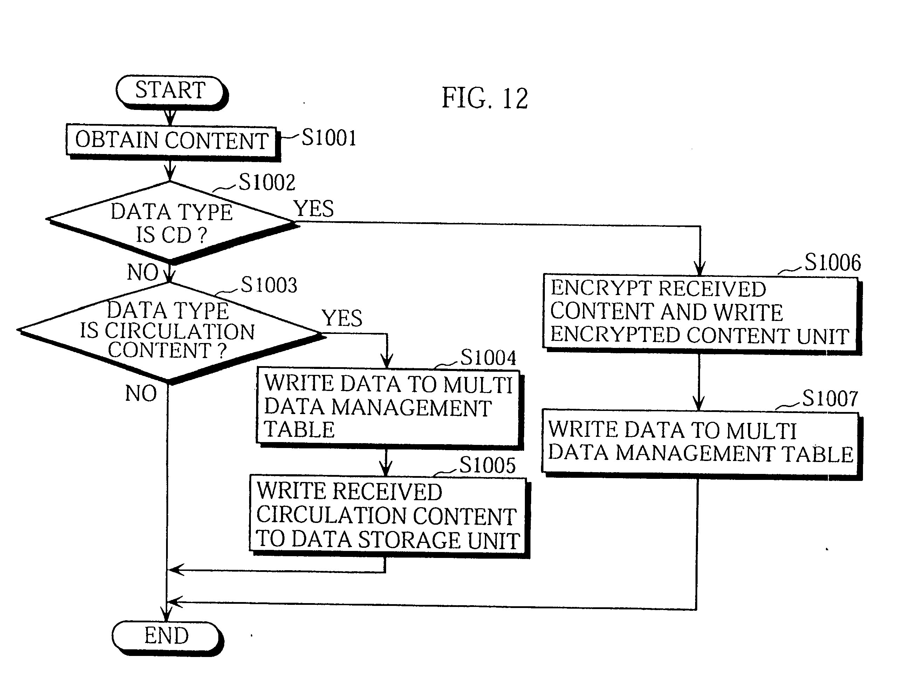

The operation of the data management apparatus 800 will be explained with reference to the flowchart shown in FIG. 12.

The input unit 812 receives the source information, a content identifier, and the usage information input by the user. The data type identification unit 801 obtains a circulation content identified by the received content identifier from an external source or reads out a not-encrypted content identified by the received content identifier from a CD or a DVD (step S1001).

When having received the information indicating that the sent content has been read from CD from the data type identification unit 801 (step S1002), the data type recording unit 802 reads out rights information from the rights management table 803, reads out an encryption method and an encryption key generation method from the control method table 813, generates an encryption key, outputs the received not-encrypted content, the read-out encryption method, the generated encryption key, and the file name to the encrypting unit 804. The encrypting unit 804 encrypts the received not-encrypted content using the received encryption key and based on the received encryption method to generate an encrypted content, then writes the generated encrypted content to the data storage unit 805 (step S1006). The data type recording unit 802 writes the data ID, encryption information, rights information, file name, and data type to the multi data management table 807 (step S1007).

When having received the information indicating that the sent content is a circulation content from the data type identification unit 801 (steps S1002 and S1003), the data type recording unit 802 writes the data ID, encryption information, rights information, file name, and data type to the multi data management table 807 (step S1004), then writes the received circulation content to the data storage unit 805 using the file name of the received file A (step S1005).

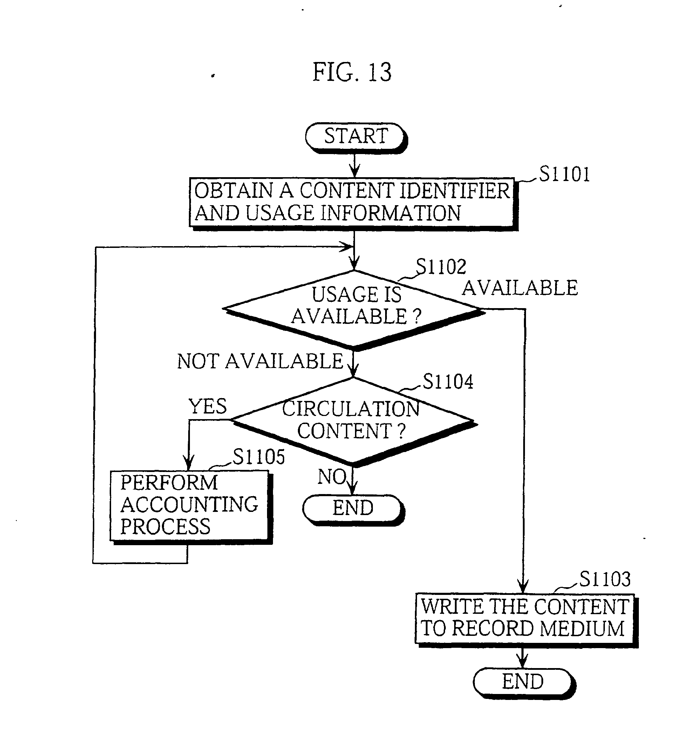

Now, the operation of the data management apparatus 800 of writing a content to the record medium 811 will be described with reference to the flowchart shown in FIG. 13.

The data control unit 809 receives the source information and a content identifier, and the usage information from the input unit 812 (step S1101). The data control unit 809 then judges whether the usage indicated by the received usage information is available by comparing the usage indicated by the received usage information with the rights information written in the same set as the received content identifier in the multi data management table 807 (step S1102). When having judged that the usage is available and further having judged that a copy is available based on the copy rights information, the data control unit 809 instructs the type transformation unit 810 to transform the type of the content identified by the received content identifier to the type of the record medium loaded into the type transformation unit 810 and to write the content with the transformed type to the record medium, and outputs the received content identifier to the type transformation unit 810. Having received these, the type transformation unit 810 reads out a content identified by the received content identifier from the data storage unit 805, transforms the type of the read-out content to the type of the record medium 811 loaded into the type transformation unit 810, and writes the content with the transformed type to the record medium 811 (step S1103).

When having judged that the usage is not available (step S1102) and further having judged from the source information that the content has been read out from CD or DVD (step S1104), the data control unit 809 ends the process.

When having judged that the usage is not available (step S1102) and further having judged from the source information that the content has been received from an external source via the network (step S1104), the data control unit 809 outputs the received content identification and the usage information of the content to the accounting processing unit 808. The accounting processing unit 808, based on the received usage information, performs an accounting process in which the charge for the use of a content identified by the content identifier is payed to an external source, and receives the rights information in accordance with the payed usage charge from the external source, and then replaces the rights information, which is written in the multi data management table 807 in the same set as the received content identifier, with the rights information received from the external source (step S1105). The control moves to step S1102. In step S1102, the data control unit 809 performs the judgement on whether the usage is available again. Then, when having judged that a copy is available, the data control unit 809 writes the content to the record medium 811.

### 2.3 Portable Player 401

After the record medium 811 is loaded into the portable player 401, the portable player 401 reads out a content from the loaded record medium 811, plays the read-out content, and outputs the played content to the headphones 402.

### 2.4 Brief Account

As described above, according to Embodiment 2, the data management apparatus 800 writes circulation contents, which have been obtained from external sources via the network and are composed of rights information and encryption information, to the data storage unit as they are. When having read out a content from a record medium such as CD, the data management apparatus 800 writes the content to the data storage unit only if it is an encrypted content, and writes a data type, rights information, and encryption information to the multi data management table. This construction relieves the data management apparatus 800 of the bother of transforming the file type of the content read out from a record medium such as CD to the file type of the circulation content by adding rights information and encryption information to it. This takes much of the load off the apparatus.

### 3 Other Variations

(1) In the above embodiments, the data type "CD" may be replaced with "DVD-Video", "DVD-Music", or "circulation content including data of a plurality of different data types (e.g., music and images)".
   In the above embodiments, the record medium 811 may be achieved by a semiconductor memory card. However, it may be achieved by an MD or the like.
(2) In the above embodiments, the data management apparatus obtains, via a network such as the Internet, a content which has been encrypted and includes rights information attached to it. However, the data management apparatus may obtain, via a network, a content which has not been encrypted and does not include rights information. In this case, the control method table 101 includes, in correspondence to this type of content, the same data storage method, encryption method, encryption key generation method, rights management method, and rights presence information as in correspondence to data type "CD" or "DVD". Also, when having received such a content, the data registration unit 104 generates an encryption key and encrypts the content in the same way as having received a content with data type "CD" or "DVD", outputs the encrypted content to the data storage unit 106, and writes the data ID, encryption information, rights information, and file name to the data management table 105.
(3) In the above embodiments, the following arrangement is possible. The type transformation unit 810 writes to the record medium 811 rights information which indicates that the play is available, the copy is not available, and the move is not available. When the record medium 811 in which a content and the above rights information is recorded is loaded into the portable player 401, the portable player 401 reads out the rights information from the record medium 811 and judges whether the play is available. When having judged that the play is available, the portable player 401 plays the content. When having judged that the play is not available, the portable player 401 does not play the content.
(4) In the above embodiments, the play rights, copy rights, and move rights information respectively show whether the user is permitted to play, copy, or move the content, where "available" indicates that the user is permitted to perform the operation, and "not available" indicates that the user is not permitted to perform the operation. However, the play rights, copy rights, and move rights information may include the number of permitted operations of play, copy, and move, respectively. In this case, the user is permitted to perform the operation as many times as the rights information indicates, and the number in the information is subtracted by one each time the user executes the operation.
   Alternatively, the play rights, copy rights, and move rights information may each show a time limit for the operation. In this case, the user is permitted to perform the operation until the time limit has been reached.
(5) In the above embodiments, the data management apparatus 800 obtains music information via a network or from record mediums such as CD, and store, play, copy, or move the obtained music information. However, the data management apparatus 800 may deal with movie information including still image information, video information, sounds, and moving pictures, computer programs, character information, or multimedia information (e.g., HTML documents) which includes control information, character information, still images, moving images, and sounds.
(6) The present invention will be fulfilled by a method for achieving the above apparatuses. The present invention will also be fulfilled by a computer program which allows computers to execute the above method. The present invention will also be fulfilled by digital signals constituting the computer program.
   The present invention will also be fulfilled by a computer-readable record medium (e.g., a floppy disk, a hard disk, a CD-ROM, an MO, a DVD, a DVD-ROM, a DVD-RAM, or a semiconductor memory) in which the computer program or the digital signals are recorded. Alternatively, the present invention will be fulfilled by the computer program or the digital signals recorded in the computer-readable record medium.
   The present invention will also be fulfilled by the computer program or the digital signals having been transferred via a network such as a telecommunication, a wired or wireless communication line, and the Internet.
   The computer program of the present invention may be transferred to another stand-alone computer system via a record medium recording the computer program or via a network, so that the computer program is executed by the computer system.
(7) The present invention may be fulfilled by combinations of the above embodiments and variations.
   The present invention has been fully described by way of examples with reference to the accompanying drawings, it is to be noted that various changes and modifications will be apparent to those skilled in the art.

## Claims

1. A data management apparatus for managing digital contents distributed in a market, with corresponding rights information, the data management apparatus comprising:
a rights information storage means (102; 803) for prestoring a separate piece of rights information for each type of digital content, each piece of rights information including play rights information indicating whether reproduction is permitted for contents of the type corresponding to the piece of play rights information;
a content storage means (106; 805);
a content obtaining means for obtaining a digital content from one of a plurality of external sources via one of a plurality of routes (158, 159) respectively corresponding to the plurality of external sources, wherein each route (158, 159) determines whether rights information has been added to digital contents thereon;
a protection judging means for judging, based on the particular route (158, 159) via which the digital content is obtained, whether rights information has been added to the obtained digital content;
a type identification means (103; 801) for identifying a type of the obtained digital content if the protection judging means has judged that rights information has not been added to the obtained digital content;
a rights information reading means for reading rights information from the rights information storage means (102; 803) that corresponds to the type of the obtained digital content;
a content writing means (104; 802, 804) for writing the obtained digital content to the content storage means (106; 805); and
a rights information writing means for writing the read rights information to the content storage means (106; 805) so as to correspond to digital content written by the content writing means (104; 802, 804).

2. The data management apparatus of claim 1, wherein
the plurality of routes are a record medium (300) and a network (20), and
the protecting judging means judges that rights information has not been added to the obtained digital content if the digital content has been obtained via the record medium (300), and judges that rights information has been added to the obtained digital content if the digital content has been obtained via the network (20).

3. The data management apparatus of Claim 2, wherein
the content writing means (104; 802, 804) further adds the read rights information to the digital content written to the content storage means (106; 805).

4. The data management apparatus of Claim 2, wherein
each piece of rights information further includes copy rights information indicating whether a check out is permitted or not, wherein in each check out, a digital content and a piece of copy rights information corresponding to the digital content are copied to an external device.

5. The data management apparatus of Claim 4, wherein
each piece of copy rights information includes the number of permitted check outs.

6. The data management apparatus of Claim 2, wherein
each piece of rights information further includes move rights information indicating whether a digital content and a piece of rights information corresponding to the digital content are permitted to be moved to an external device.

7. The data management apparatus of Claim 2, further comprising:
a play means for obtaining a digital content and a piece of rights information corresponding to the digital content, and playing the obtained digital content in accordance with the read piece of rights information.

8. A data management method for use in a data management apparatus for managing digital contents distributed in a market, with corresponding rights information, the data management apparatus comprising a rights information storage means and a content storage means, the rights information storage means prestoring a separate piece of rights information for each type of digital content, each piece of rights information including play rights information indicating whether reproduction is permitted for contents of the type corresponding to the piece of play rights information, the data management method comprising:
a content obtaining step (step S101) for obtaining a digital content from one of a plurality of external sources via one of a plurality of routes respectively corresponding to the plurality of external sources, wherein each route determines whether rights information has been added to digital contents thereon;
a protection judging step (step S103) for judging, based on the particular route via which the digital content is obtained , whether rights information has been added to the obtained digital content;
a type identification step for identifying a type of the obtained digital content if the protection judging step (step S103) has judged that rights information has not been added to the obtained digital content;
a rights information reading step (step S114) for reading rights information from the rights information storage means that corresponds to the type of the obtained digital content;
a content writing step for writing the obtained digital content to the content storage means; and
a rights information writing step (step S115) for writing the read rights information to the content storage means so as to correspond to digital content written by the content writing means.

9. The data management method of claim 8, wherein
the plurality of routes are a record medium and a network, and
the protecting judging step judges that rights information has not been added to the obtained digital content if the digital content has been obtained via the record medium, and judges that rights information has been added to the obtained digital content if the digital content has been obtained via the network.

10. The data management method of Claim 9, wherein
in the content writing step, the read rights information is added to the digital content written to the content storage means.

11. The data management method of Claim 9, wherein
each piece of rights information further includes copy rights information indicating whether a check out is permitted or not, wherein in each check out, a digital content and a piece of copy rights information corresponding to the digital content are copied to an external device.

12. The data management method of Claim 11, wherein
each piece of copy rights information includes the number of permitted check outs.

13. The data management method of Claim 9, wherein
each piece of rights information further includes move rights information indicating whether a digital content and a piece of rights information corresponding to the digital content are permitted to be moved to an external device.

14. The data management method of Claim 9, further comprising:
a play step for obtaining a digital content and a piece of rights information corresponding to the digital content, and playing the obtained digital content in accordance with the read piece of rights information.

15. A computer-readable record medium storing a data management program for use in a data management apparatus which manages digital contents distributed in a market, with corresponding rights information, the data management apparatus comprising a rights information storage means and a content storage means, the rights information storage means prestoring a separate piece of rights information for each type of digital content, each piece of rights information including play rights information indicating whether reproduction is permitted for contents of the type corresponding to the piece of play rights information, the data management program comprising:
a content obtaining step (step S101) for obtaining a digital content from one of a plurality of external sources via one of a plurality of routes respectively corresponding to the plurality of external sources, wherein each route determines whether rights information has been added to digital contents thereon;
a protection judging step (step S103) for judging, based on the particular route via which the digital content is obtained , whether rights information has been added to the obtained digital content;
a type identification step for identifying a type of the obtained digital content if the protection judging step (step S103) has judged that rights information has not been added to the obtained digital content;
a rights information reading step (step S114) for reading rights information from the rights information storage means that corresponds to the type of the obtained digital content;
a content writing step for writing the obtained digital content to the content storage means; and
a rights information writing step (step S115) for writing the read rights information to the content storage means so as to correspond to digital content written by the content writing means.

16. The computer-readable record medium of claim 15, wherein
the plurality of routes are a record medium and a network, and
the protecting judging step judges that rights information has not been added to the obtained digital content if the digital content has been obtained via the record medium, and judges that rights information has been added to the obtained digital content if the digital content has been obtained via the network.

17. The computer-readable record medium of claim 16, wherein
in the content writing step, the read rights information is added to the digital content written to the content storage means.

18. The computer-readable record medium of claim 16, wherein
each piece of rights information further includes copy rights information indicating whether a check out is permitted or not, wherein in each check out, a digital content and a piece of copy rights information corresponding to the digital content are copied to an external device.

19. The computer-readable record medium of claim 18, wherein
each piece of copy rights information includes the number of permitted check outs.

20. The computer-readable record medium of claim 16, wherein
each piece of rights information further includes move rights information indicating whether a digital content and a piece of rights information corresponding to the digital content are permitted to be moved to an external device.

21. The computer-readable record medium of claim 16, further comprising:
a play step for obtaining a digital content and a piece of rights information corresponding to the digital content, and playing the obtained digital content in accordance with the read piece of rights information.

## Patentansprüche

1. Ein Datenverwaltungsgerät um digitale Inhalte zu verwalten, die einem Markt zur Verfügung gestellt werden, mit zugehöriger Rechteinformation; dieses Datenverwaltungsgerät umfassend:
eine Vorrichtung um Rechteinformation zu speichern (102; 803), um für jeden Typ digitalen Inhalts einen separaten Anteil an Rechteinformation vorab zu speichern; jeder Anteil dieser Rechteinformation beinhaltet Informationen zu den Wiedergaberechten, die anzeigen, ob eine Wiedergabe der Inhalte erlaubt ist, auf deren Typ sich der Teil der Abspielrechte bezieht;
eine Vorrichtung um Inhalte zu speichern (106; 805);
eine Vorrichtung um Inhalte zu erhalten, mit der digitale Inhalte von einer aus einer Mehrzahl von externen Quellen über einen aus einer Mehrzahl von Wegen erhalten werden können (158; 159) beziehungsweise mit der ein Austausch mit einer Mehrzahl von externen Quellen vorgenommen werden kann, wobei jeder Weg (158; 159) vorgibt, ob Rechteinformation zu den jeweiligen digitalen Inhalten hinzugefügt wurden;
eine Vorrichtung den Schutz zu beurteilen, mit der, unter Berücksichtigung des jeweiligen Weges (158; 159), über den die digitalen Inhalte erhalten wurden, beurteilt werden kann, ob Rechteinformation zu den erhaltenen digitalen Inhalten hinzugefügt worden ist;
eine Vorrichtung zur Identifizierung des Typs (103; 801), um einen Typ der erhaltenen digitalen Inhalte zu identifizieren, wenn die Vorrichtung, den Schutz zu beurteilen, zu dem Urteil gekommen ist, dass den erhaltenen digitalen Inhalten keine Rechteinformation hinzugefügt wurde;
eine Vorrichtung die Rechteinformation zu lesen, mit der die Rechteinformation, die dem Typ der erhaltenen digitalen Inhalte entsprechen, aus der Vorrichtung zur Speicherung von Rechteinformation (102; 803) gelesen werden kann;
eine Vorrichtung Inhalte zu schreiben (104; 802, 804), mit der die erhaltenen digitalen Inhalte in die Vorrichtung zur Speicherung von Inhalten geschrieben werden können (106; 805); und
eine Vorrichtung Rechteinformation zu schreiben, mit der die gelesene Rechteinformation in die Vorrichtung zur Speicherung von Inhalten (106; 805) geschrieben werden kann, damit sie auf die digitalen Inhalte, die von der Vorrichtung zum Schreiben von Inhalten geschrieben wurden, bezogen werden kann (104; 802, 804).

2. Das Datenverwaltungsgerät nach Anspruch 1, wobei
die Mehrzahl der Wege aus einem Speichermedium (300) und einem Netzwerk (20) bestehen, und
die Vorrichtung zur Beurteilung des Schutzes urteilt, dass keine Rechteinformation zu den erhaltenen digitalen Inhalten hinzugefügt wurde, wenn die digitalen Inhalte über das Speichermedium (300) erhalten wurden, und urteilt, dass Rechteinformation zu den erhaltenen digitalen Inhalten hinzugefügt wurde, wenn die digitalen Inhalte über das Netzwerk (20) erhalten wurden.

3. Das Datenverwaltungsgerät nach Anspruch 2, wobei
die Vorrichtung Inhalte zu schreiben (104; 802, 804) weiterhin die gelesenen Rechteinformation den digitalen Inhalten, die in die Vorrichtung zur Speicherung von digitalen Inhalten geschrieben wurden, hinzufügt (106; 805).

4. Das Datenverwaltungsgerät nach Anspruch 2, wobei
jeder Anteil an Rechteinformation weiterhin Kopier-Rechteinformation einschließt, die anzeigt, ob eine Freigabe erlaubt ist oder nicht, wobei bei jeder Freigabe ein digitaler Inhalt zusammen mit einem Teil der Kopier-Rechteinformation entsprechend des digitalen Inhalts auf eine externe Vorrichtung kopiert werden.

5. Das Datenverwaltungsgerät nach Anspruch 4, wobei
jeder Anteil der Kopier-Rechteinformation die Anzahl der erlaubten Freigaben enthält.

6. Das Datenverwaltungsgerät nach Anspruch 2, wobei
jeder Anteil an Rechteinformation weiterhin Rechteinformation bezüglich des Transports enthält, die anzeigt, ob der Transport eines digitalen Inhalts und eines Anteils der Rechteinformation entsprechend des digitalen Inhalts, auf eine externe Vorrichtung erlaubt ist.

7. Das Datenverwaltungsgerät nach Anspruch 2, weiterhin umfassend:
eine Vorrichtung zur Wiedergabe, um einen digitalen Inhalt und einen Anteil der Rechteinformation entsprechend den digitalen Inhalten zu erhalten und die erhaltenen digitalen Inhalte in Übereinstimmung mit dem gelesenen Anteil der Rechteinformation wiederzugeben.

8. Eine Datenverwaltungsmethode zur Anwendung in einem Datenverwaltungsgerät, um digitale Inhalte, die einem Markt zur Verfügung gestellt werden, mit zugehöriger Rechteinformation zu verwalten. Dieses Datenverwaltungsgerät umfasst eine Vorrichtung, um Rechteinformation zu speichern und eine Vorrichtung, um Inhalte zu speichern, wobei die Vorrichtung um Rechteinformation zu speichern, für jeden Typ digitalen Inhalts einen separaten Anteil an Rechteinformation vorab speichert. Jede dieser Rechteinformation beinhaltet Informationen zu den Abspielrechten die anzeigen, ob eine Wiedergabe der Inhalte erlaubt ist, auf deren Typ sich der Anteil der Abspielrechte bezieht, diese Datenverwaltungsmethode umfasst:
einen Schritt um Inhalte zu erhalten (Schritt S101), mit der digitale Inhalte von einer aus einer Mehrzahl von externen Quellen über einen aus einer Mehrzahl von Wegen erhalten werden können beziehungsweise mit der ein Austausch mit einer Mehrzahl von externen Quellen vorgenommen werden kann, wobei jeder Weg vorgibt, ob Rechteinformation zu den jeweiligen digitalen Inhalten hinzugefügt wurden;
einen Schritt den Schutz zu beurteilen (Schritt S103), mit der, unter Berücksichtigung des jeweiligen Weges, über den die digitalen Inhalte erhalten wurden, beurteilt werden kann, ob Rechteinformation zu den erhaltenen digitalen Inhalten hinzugefügt worden ist;
einen Schritt zur Identifizierung des Typs, um einen Typ der erhaltenen digitalen Inhalte zu identifizieren, wenn der Schritt den Schutz zu beurteilen (Schritt S103) zu dem Urteil gekommen ist, dass den erhaltenen digitalen Inhalten keine Rechteinformation hinzugefügt wurden;
einen Schritt die Rechteinformation zu lesen (Schritt S114), mit der die Rechteinformation, die dem Typ der erhaltenen digitalen Inhalte entsprechen, aus der Vorrichtung zur Speicherung von Rechteinformation gelesen werden kann;
einen Schritt Inhalte zu schreiben, mit dem die erhaltenen digitalen Inhalte in die Vorrichtung zur Speicherung von Inhalten geschrieben werden können; und
einen Schritt, Rechteinformation zu schreiben (Schritt S115), mit dem die gelesenen Rechteinformation in die Vorrichtung zur Speicherung von Inhalten geschrieben werden kann, damit sie auf die digitalen Inhalte, die von der Vorrichtung zum Schreiben von Inhalten geschrieben wurden, bezogen werden kann.

9. Die Datenverwaltungsmethode nach Anspruch 8, wobei
die Mehrzahl der Wege ein Speichermedium und ein Netzwerk sind, und
der Schritt zur Beurteilung des Schutzes urteilt, dass keine Rechteinformation zu den erhaltenen digitalen Inhalten hinzugefügt wurde, wenn die digitalen Inhalte über das Speichermedium erhalten wurden, und urteilt, dass Rechteinformation zu den erhaltenen digitalen Inhalten hinzugefügt wurde, wenn die digitalen Inhalte über das Netzwerk erhalten wurden.

10. Die Datenverwaltungsmethode nach Anspruch 9, wobei
durch der Schritt Inhalte zu schreiben die gelesenen Rechteinformation den digitalen Inhalten, die in die Vorrichtung zur Speicherung von digitalen Inhalten geschrieben wurden, hinzufügt wird.

11. Die Datenverwaltungsmethode nach Anspruch 9, wobei
jeder Anteil an Rechteinformation weiterhin Kopier-Rechteinformation einschließt, die anzeigt, ob eine Freigabe erlaubt ist oder nicht, wobei bei jeder Freigabe ein digitaler Inhalt zusammen mit einem Anteil der Kopier-Rechteinformation entsprechend des digitalen Inhalts auf eine externe Vorrichtung kopiert werden.

12. Die Datenverwaltungsmethode nach Anspruch 11, wobei
jeder Anteil der Kopier-Rechteinformation die Anzahl der erlaubten Freigaben enthält.

13. Die Datenverwaltungsmethode nach Anspruch 9, wobei
jeder Anteil an Rechteinformation weiterhin Rechteinformation bezüglich des Transports enthält, die anzeigen, ob der Transport eines digitalen Inhalts und eines Anteils der Rechteinformation entsprechend des digitalen Inhalts, auf eine externe Vorrichtung erlaubt ist.

14. Die Datenverwaltungsmethode nach Anspruch 9, weiterhin umfassend:
einen Schritt zur Wiedergabe, um einen digitalen Inhalt und einen Anteil der Rechteinformation entsprechend den digitalen Inhalten zu erhalten und die erhaltenen digitalen Inhalte in Übereinstimmung mit dem gelesenen Anteil der Rechteinformation wiederzugeben.

15. Ein computer-lesbares Speichermedium, das ein Datenverwaltungsprogramm zur Anwendung in einem Datenverwaltungsgerät gespeichert hat, um digitale Inhalte, die einem Markt zur Verfügung gestellt werden, mit zugehörigen Rechteinformation zu verwalten, dieses Datenverwaltungsgerät umfasst eine Vorrichtung um Rechteinformation zu speichern und eine Vorrichtung um Inhalte zu speichern, wobei die Vorrichtung um Rechteinformation zu speichern, für jeden Typ digitalen Inhalts einen separaten Anteil an Rechteinformation vorab speichert; jeder Anteil dieser Rechteinformation beinhaltet Informationen zu den Abspielrechten, die anzeigen, ob eine Wiedergabe der Inhalte erlaubt ist, auf deren Typ sich der Anteil der Abspielrechte bezieht; diese Datenverwaltungsmethode umfassend:
einen Schritt, um Inhalte zu erhalten (Schritt S101), mit der digitale Inhalte von einer aus einer Mehrzahl von externen Quellen über einen aus einer Mehrzahl von Wegen erhalten werden können beziehungsweise mit der ein Austausch mit einer Mehrzahl von externen Quellen vorgenommen werden kann, wobei jeder Weg bestimmt, ob Rechteinformation zu den jeweiligen digitalen Inhalten hinzugefügt wurden;
einen Schritt den Schutz zu beurteilen (Schritt S103), mit der, unter Berücksichtigung des jeweiligen Weges, über den die digitalen Inhalte erhalten wurden, beurteilt werden kann, ob Rechteinformation zu den erhaltenen digitalen Inhalten hinzugefügt worden ist;
einen Schritt zur Identifizierung des Typs, um einen Typ der erhaltenen digitalen Inhalte zu identifizieren, wenn der Schritt den Schutz zu beurteilen (Schritt S103) zu dem Urteil gekommen ist, dass den erhaltenen digitalen Inhalten keine Rechteinformation hinzugefügt wurden;
einen Schritt die Rechteinformation zu lesen (Schritt S114), mit der die Rechteinformation, die dem Typ der erhaltenen digitalen Inhalte entspricht, aus der Vorrichtung zur Speicherung von Rechteinformation gelesen werden kann;
einen Schritt Inhalte zu schreiben, mit der die erhaltenen digitalen Inhalte in die Vorrichtung zur Speicherung von Inhalten geschrieben werden können; und
einen Schritt, Rechteinformation zu schreiben (Schritt S115), mit der die gelesene Rechteinformation in die Vorrichtung zur Speicherung von Inhalten geschrieben werden kann, damit sie auf die digitalen Inhalte, die von der Vorrichtung zum Schreiben von Inhalten geschrieben wurden, bezogen werden kann.

16. Das computer-lesbare Speichermedium nach Anspruch 15, wobei
die Mehrzahl der Wege ein Speichermedium und ein Netzwerk sind, und
der Schritt zur Beurteilung des Schutzes urteilt, dass keine Rechteinformation zu den erhaltenen digitalen Inhalten hinzugefügt wurde, wenn die digitalen Inhalte über das Speichermedium erhalten wurden, und urteilt, dass Rechteinformation zu den erhaltenen digitalen Inhalten hinzugefügt wurden, wenn die digitalen Inhalte über das Netzwerk erhalten wurden.

17. Das computer-lesbare Speichermedium nach Anspruch 16, wobei
durch den Schritt, Inhalte zu schreiben, die gelesene Rechteinformation den digitalen Inhalten, die in die Vorrichtung zur Speicherung von digitalen Inhalten geschrieben wurden, hinzufügt wird.

18. Das computer-lesbare Speichermedium nach Anspruch 16, wobei
jeder Anteil an Rechteinformation weiterhin Kopier-Rechteinformation einschließt, die anzeigt, ob eine Freigabe erlaubt ist oder nicht, wobei bei jeder Freigabe ein digitaler Inhalt zusammen mit einem Anteil der Kopier-Rechteinformation entsprechend des digitalen Inhalts auf eine externe Vorrichtung kopiert werden.

19. Das computer-lesbare Speichermedium nach Anspruch 18, wobei
jeder Anteil der Kopier-Rechteinformation die Anzahl der erlaubten Freigaben enthält.

20. Das computer-lesbare Speichermedium nach Anspruch 16, wobei
jeder Anteil an Rechteinformation weiterhin Rechteinformation bezüglich des Transports enthält, die anzeigen, ob der Transport eines digitalen Inhalts und eines Anteils der Rechteinformation entsprechend des digitalen Inhalts, auf eine externe Vorrichtung erlaubt ist.

21. Das computer-lesbare Speichermedium nach Anspruch 16, weiterhin umfassend:
einen Schritt zur Wiedergabe, um einen digitalen Inhalt und einen Anteil der Rechteinformation entsprechend den digitalen Inhalten zu erhalten und die erhaltenen digitalen Inhalte in Übereinstimmung mit dem gelesenen Anteil der Rechteinformation wiederzugeben.

## Revendications

1. Appareil de gestion de données pour gérer des contenus numériques distribués dans un marché, avec une information de droits correspondante, l'appareil de gestion de données comprenant :
un moyen de stockage d'information de droits (102 ; 803) pour préstocker un morceau séparé d'information de droits pour chaque type de contenu numérique, chaque morceau d'information de droits incluant une information de droits de lancement indiquant si une reproduction est permise pour des contenus du type correspondant au morceau d'information de droits de lancement ;
un moyen de stockage de contenu (106 ; 805) ;
un moyen d'obtention de contenu pour obtenir un contenu numérique à partir de l'une d'une pluralité de sources externes à travers l'un d'une pluralité de chemins (158, 159) correspondants respectivement à la pluralité de sources externes, où chaque chemin (158, 159) détermine si une information de droits a été ajoutée à des contenus numériques sur celui-ci ;
un moyen pour juger d'une protection pour juger, sur la base du chemin particulier (158, 159) à travers lequel le contenu numérique est obtenu, si une information de droits a été ajoutée au contenu numérique obtenu ;
un moyen d'identification de type (103 ; 801) pour identifier un type du contenu numérique obtenu si le moyen pour juger d'une protection a jugé qu'une information de droits n'a pas été ajoutée au contenu numérique obtenu ;
un moyen de lecture d'information de droits pour lire une information de droits à partir du moyen de stockage d'information de droits (102 ; 803) qui correspond au type du contenu numérique obtenu;
un moyen d'écriture de contenu (104 ; 802 ; 804) pour écrire le contenu numérique obtenu au moyen de stockage de contenu (106 ; 805) ; et
un moyen d'écriture d'information de droits pour écrire l'information de droits lue au moyen de stockage de contenu (106 ; 805) de manière à correspondre à un contenu numérique écrit par le moyen d'écriture de contenu (104 ; 802 ; 804).

2. Appareil de gestion de données de la revendication 1, dans lequel
la pluralité de chemins sont un support d'enregistrement (300) et un réseau (20), et
le moyen pour juger d'une protection juge qu'une information de droits n'a pas été ajoutée au contenu numérique obtenu si le contenu numérique a été obtenu à travers le support d'enregistrement (300), et juge qu'une information de droits a été ajoutée au contenu numérique obtenu si le contenu numérique a été obtenu à travers le réseau (20).

3. Appareil de gestion de données de la revendication 2, dans lequel
le moyen d'écriture de contenu (104 ; 802 ; 804) ajoute en plus l'information de droits lue au contenu numérique écrit au moyen de stockage de contenu (106 ; 805).

4. Appareil de gestion de données de la revendication 2, dans lequel
chaque morceau d'information de droits inclut en plus une information de droits de copie indiquant si une extraction est permise ou non, où dans chaque extraction, un contenu numérique et un morceau d'information de droits de copie correspondant au contenu numérique sont copiés vers un dispositif externe.

5. Appareil de gestion de données de la revendication 4, dans lequel
chaque morceau d'information de droits de copie inclut le nombre d'extractions permis.

6. Appareil de gestion de données de la revendication 2, dans lequel
chaque morceau d'information de droits inclut en plus une information de droits de déplacement indiquant si un contenu numérique et un morceau d'information de droits correspondant au contenu numérique sont habilités à être déplacés vers un dispositif externe.

7. Appareil de gestion de données de la revendication 2, comprenant en plus :
un moyen de lancement pour obtenir un contenu numérique et un morceau d'information de droits correspondant au contenu numérique, et lancer le contenu numérique obtenu en conformité avec le morceau d'information de droits lue.

8. Procédé de gestion de données pour utilisation dans un appareil de gestion de données pour gérer des contenus numériques distribués dans un marché, avec une information de droits correspondante, l'appareil de gestion de données comprenant un moyen de stockage d'information de droits et un moyen de stockage de contenu, le moyen de stockage d'information de droits préstockant un morceau séparé d'information de droits pour chaque type de contenu numérique, chaque morceau d'information de droits incluant une information de droits de lancement indiquant si une reproduction est permise pour des contenus du type correspondant au morceau d'information de droits de lancement, le procédé de gestion de données comprenant :
une étape d'obtention de contenu (étape S101) pour obtenir un contenu numérique à partir de l'une d'une pluralité de sources externes à travers l'un d'une pluralité de chemins correspondant respectivement à la pluralité de sources externes, où chaque chemin détermine si une information de droits a été ajoutée à des contenus numériques sur celui-ci ;
une étape pour juger d'une protection (étape S103) pour juger, sur la base du chemin particulier à travers lequel le contenu numérique est obtenu, si une information de droits a été ajoutée au contenu numérique obtenu ;
une étape d'identification de type pour identifier un type du contenu numérique obtenu si l'étape pour juger d'une protection (étape S103) a jugé qu'une information de droits n'a pas été ajoutée au contenu numérique obtenu ;
une étape de lecture d'information de droits (étape S114) pour lire une information de droits à partir du moyen de stockage d'information de droits qui correspond au type du contenu numérique obtenu ;
une étape d'écriture de contenu pour écrire le contenu numérique obtenu au moyen de stockage de contenu ; et
une étape d'écriture d'information de droits (étape S115) pour écrire l'information de droits lue au moyen de stockage de contenu de manière à correspondre à un contenu numérique écrit par le moyen d'écriture de contenu.

9. Procédé de gestion de données de la revendication 8, dans lequel
la pluralité de chemins sont un support d'enregistrement et un réseau, et
l'étape pour juger d'une protection juge qu'une information de droits n'a pas été ajoutée au contenu numérique obtenu si le contenu numérique a été obtenu à travers le support d'enregistrement, et juge qu'une information de droits a été ajoutée au contenu numérique obtenu si le contenu numérique a été obtenu à travers le réseau.

10. Procédé de gestion de données de la revendication 9, dans lequel
dans l'étape d'écriture de contenu, l'information de droits lue est ajoutée au contenu numérique écrit au moyen de stockage de contenu.

11. Procédé de gestion de données de la revendication 9, dans lequel
chaque morceau d'information de droits inclut en plus une information de droits de copie indiquant si une extraction est permise ou non, où dans chaque extraction, un contenu numérique et un morceau d'information de droits de copie correspondant au contenu numérique sont copiés vers un dispositif externe.

12. Procédé de gestion de données de la revendication 11, dans lequel
chaque morceau d'information de droits de copie inclut le nombre d'extractions permises.

13. Procédé de gestion de données de la revendication 9, dans lequel
chaque morceau d'information de droits inclut en plus une information de droits de déplacement indiquant si un contenu numérique et un morceau d'information de droits correspondant au contenu numérique sont habilités à être déplacés vers un dispositif externe.

14. Procédé de gestion de données de la revendication 9, comprenant en plus :
une étape de lancement pour obtenir un contenu numérique et un morceau d'information de droits correspondant au contenu numérique, et lancer le contenu numérique obtenu en conformité avec le morceau d'information de droits lue.

15. Support d'enregistrement lisible par ordinateur stockant un programme de gestion de données pour utilisation dans un appareil de gestion de données qui gère des contenus numériques distribués dans un marché, avec une information de droits correspondante, l'appareil de gestion de données comprenant un moyen de stockage d'information de droits et un moyen de stockage de contenu, le moyen de stockage d'information de droits préstockant un morceau séparé d'information de droits pour chaque type de contenu numérique, chaque morceau d'information de droits incluant une information de droits de lancement indiquant si une reproduction est permise pour des contenus du type correspondant au morceau d'information de droits de lancement, le programme de gestion de données comprenant :
une étape d'obtention de contenu (étape S101) pour obtenir un contenu numérique à partir de l'une d'une pluralité de sources externes à travers l'un d'une pluralité de chemins correspondant respectivement à la pluralité de sources externes, où chaque chemin détermine si une information de droits a été ajoutée à des contenus numériques sur celui-ci ;
une étape pour juger d'une protection (étape S103) pour juger, sur la base du chemin particulier à travers lequel le contenu numérique est obtenu, si une information de droits a été ajoutée au contenu numérique obtenu ;
une étape d'identification de type pour identifier un type du contenu numérique obtenu si l'étape pour juger d'une protection (étape S 103) a jugé qu'une information de droits n'a pas été ajoutée au contenu numérique obtenu ;
une étape de lecture d'information de droits (étape S 114) pour lire une information de droits à partir du moyen de stockage d'information de droits qui correspond au type du contenu numérique obtenu ;
une étape d'écriture de contenu pour écrire le contenu numérique obtenu au moyen de stockage de contenu ; et
une étape d'écriture d'information de droits (étape S115) pour écrire l'information de droits lue au moyen de stockage de contenu de manière à correspondre à un contenu numérique écrit par le moyen d'écriture de contenu.

16. Support d'enregistrement lisible par ordinateur de la revendication 15, dans lequel
la pluralité de chemins sont un support d'enregistrement et un réseau, et
l'étape pour juger d'une protection juge qu'une information de droits n'a pas été ajoutée au contenu numérique obtenu si le contenu numérique a été obtenu à travers le support d'enregistrement, et juge qu'une information de droits a été ajoutée au contenu numérique obtenu si le contenu numérique a été obtenu à travers le réseau.

17. Support d'enregistrement lisible par ordinateur de la revendication 16, dans lequel
dans l'étape d'écriture de contenu, l'information de droits lue est ajoutée au contenu numérique écrit au moyen de stockage de contenu.

18. Support d'enregistrement lisible par ordinateur de la revendication 16, dans lequel
chaque morceau d'information de droits inclut en plus une information de droits de copie indiquant si une extraction est permise ou non, où dans chaque extraction, un contenu numérique et un morceau d'information de droits de copie correspondant au contenu numérique sont copiés vers un dispositif externe.

19. Support d'enregistrement lisible par ordinateur de la revendication 18, dans lequel
chaque morceau d'information de droits de copie inclut le nombre d'extractions permises.

20. Support d'enregistrement lisible par ordinateur de la revendication 16, dans lequel
chaque morceau d'information de droits inclut en plus une information de droits de déplacement indiquant si un contenu numérique et un morceau d'information de droits correspondant au contenu numérique sont habilités à être déplacés vers un dispositif externe.

21. Support d'enregistrement lisible par ordinateur de la revendication 16, comprenant en plus :
une étape de lancement pour obtenir un contenu numérique et un morceau d'information de droits correspondant au contenu numérique, et lancer le contenu numérique obtenu en conformité avec le morceau d'information de droits lue.
